# EUROPEAN PATENT SPECIFICATION

(11) **EP 4 094 346 B1**
(45) Date of publication and mention of the grant of the patent: **09.12.2026**
(21) Application number: 21701908.2
(22) Date of filing: 13.01.2021
(51) Int. Cl.: H02K 1/18, H02K 7/18

(54) **SUPPORT STRUCTURE AND SEGMENTED STATOR FOR AN ELECTRIC MACHINE, WIND TURBINE AND METHOD OF MANUFACTURING A SUPPORT STRUCTURE**
TRÄGERSTRUKTUR UND SEGMENTIERTER STATOR FÜR EINE ELEKTRISCHE MASCHINE, WINDTURBINE UND VERFAHREN ZUR HERSTELLUNG EINER TRÄGERSTRUKTUR
STRUCTURE DE SUPPORT ET STATOR SEGMENTÉ POUR MACHINE ÉLECTRIQUE, ÉOLIENNE ET PROCÉDÉ DE FABRICATION D'UNE STRUCTURE DE SUPPORT

(30) Priority: 28.02.2020 EP 20160089
(43) Date of publication of application: 30.11.2022
(73) Proprietor: Siemens Gamesa Renewable Energy A/S, 7330 Brande (DK)
(72) Inventor: JENSEN, Simon Vyff, 7160 Tørring (DK)
(74) Representative: SGRE-Association
(86) International application number: PCT/EP2021/050557
(87) International publication number: WO 2021/170306

(56) References cited:
- EP-A1- 3 252 928
- EP-A1- 3 595 147
- EP-A2- 3 032 703
- WO-A1-2006/008331
- GB-A- 1 114 413

## Description

### Field of Invention

The present invention relates to the field of electric machines, more specifically to a support structure for supporting a lamination stack and a winding structure in order to form a stator segment for an electric machine, in particular a wind turbine generator, and to a method of manufacturing such a support structure. The present invention further relates to a stator and to a wind turbine comprising such a stator.

### Art Background

When designing segmented stators for large electric machines, such as wind turbine generators, many aspects and constraints have to be taken into consideration. In many cases it is not possible to utilize the maximum length of the stator due to boundary conditions from surrounding components and due to the design of the segment support structure itself. This causes a lower performance compared to what would theoretically be available. Hence, less torque with lower output power is the result. There is thus a desire for maximizing the torque output of the generator without adding significant costs to the generator. To utilize the maximum length of the stator, a significantly more complex segment support structure design would be required. However, this would increase the costs significantly.

Conventionally, the segment support structure is designed with simple machined pressure plates with an integrated finger plate in one end. The electrical lamination steel is stacked, in packages, from the integrated finger plate to the other end of the support structure. The lamination is enclosed in the support structure by either bolting or welding on a finger plate in the open end of the support structure. However, this provides a number of boundary conditions for the length of the electrical steel, as the support structure is enclosing the lamination stack within the width of the support structure.

Hence, there may be a need for a way of flexibly increasing the effective size of the stator without adding complexity and corresponding costs.

### Summary of the Invention

The invention is a support structure as defined in the independent claim 1 and a method of manufacturing a support structure as defined in the independent claim 12. Advantageous embodiments of the present invention are set forth in the dependent claims 2 - 11.

According to a first aspect of the invention there is provided a support structure for supporting a lamination stack and a winding structure in order to form a stator segment for an electric machine, in particular a wind turbine generator. The support structure comprises (a) a frame comprising two parallel end plates and two side plates, the side plates extending between corresponding end portions of the end plates, (b) a plurality of internal connecting members extending within the frame between the end plates, and (c) a plurality of external connecting members extending outside of the frame, each external connecting member forming an extension of a corresponding internal connecting member beyond one of the end plates, wherein (d) the internal and external connecting members are adapted to engage with corresponding fastening members for securing a lamination stack.

This aspect of the invention is based on the idea that the effective length of the support structure is extended beyond the length of the frame by adding external connecting members extending outside of the frame in such a way that they extend the internal connecting members within the frame and thereby add to the total length of the connecting members. Thereby, a larger lamination stack can be supported by the resulting support structure. The amount of extension can be chosen in view of the space available and thus allows a relatively simple optimization of the resulting generator.

According to an embodiment of the invention, the external connecting members have a u-shaped cross section.

The u-shape is advantageous as the legs of the profile provides strength and can be secured to the corresponding end plate while the bottom (or top, depending on the orientation) can be used to engage with the fastening members for securing the lamination stack.

According to a further embodiment of the invention, the u-shaped cross section has a height that decreases with increasing distance away from the corresponding end plate.

In other words, the legs of the profile have maximum length at the corresponding end plate and get shorter with increasing distance away from the end plate. This shape assures that a robust connection with the end plate is possible while less space is occupied in the region outside of the frame.

According to a further embodiment of the invention, the external connecting members extending from one of the end plates have a first length and the external connecting members extending from the other one of the end plates have a second length.

In other words, the length of the extensions from one end plate may be different from or equal to the length of the extensions from the other end plate. While a symmetric structure (with equal first and second lengths) may in many cases be preferable, the flexibility provided by the present invention to have different lengths of extensions may be very useful in some cases, e.g. in order to leave enough space at one end of the stator to other structural components.

According to a further embodiment of the invention, the first length and the second length are between 5% and 25%, such as around 15%, of the length of the lamination stack.

According to a further embodiment of the invention, each of the internal connecting members and external connecting members comprises a plurality of holes for allowing a bolt connection with the corresponding fastening members.

The fastening members may be integrated in the lamination stack material or they may be separate (i.e. intermediate) parts that are also connected to the lamination stack. One example of a separate part is a rod shaped to fit into a corresponding recess in the lamination stack in order to form a dovetail connection between the support structure and the lamination stack. Fastening members that are integrated in the lamination stack may simply be sections of the lamination material that are to be welded to the connecting members. Alternatively, the integrated fastening members may be a fastening structure formed to receive a bolt or some other kind of fastening element.

According to a further embodiment of the invention, the end plates have an arc-like shape.

The arc-like shape assures that several segments can be arranged side by side to form a round stator.

According to the invention, at least one of the end plates is adapted to be connected to a finger plate via a finger plate connecting structure.

A finished stator segment has a finger plate at both ends of the structure, each finger plate forming a boundary for the lamination stack. The finger plate connecting structure is particularly useful to a finger plate once the lamination stack has been formed (on top of another previously installed finger plate).

According to a further embodiment of the invention, the end plate comprises a plurality of holes, and the finger plate connecting structure comprises a plurality of cylindrical spacers and a plurality of bolts.

The cylindrical spacers have substantially the same length as the external connecting members. More specifically, the cylindrical spacers may be slightly shorter than the external connecting members, or they may have the same length as the external connecting members. It should be noted that the length of the spacers must not exceed the length of the external connecting members. Hence, the finger plate can be arranged and secured at the end of the external connecting members by pushing each bolt through a hole in the end plate and further through a cylindrical spacer and into a threaded hole in the finger plate. Alternatively, the finger plate may comprise unthreaded holes. In this case, nuts may be used to fasten the bolts.

According to a further embodiment of the invention, each of the two side plates comprises side connecting members for mechanically connecting the support structure with a neighboring support structure.

The side connecting members may in particular utilize bolts and nuts to mechanically connect the support structures of neighboring segments.

According to a second aspect of the invention, there is provided a stator for an electric machine, in particular a wind turbine generator, the stator comprising a plurality of interconnected stator segments, wherein each stator segment comprises a support structure according to the first aspect or any of the above embodiments, a lamination stack and a winding structure.

This aspect of the invention is generally based on the same idea as the first aspect and utilizes the advantages described above to provide a larger and more effective stator without significantly increasing costs.

According to a third aspect of the invention, there is provided a wind turbine comprising a stator according to the second aspect.

Compared to a similar wind turbine without extended stator, the wind turbine according to this aspect will be able to produce a significantly larger amount of power during its lifetime without being significantly more expensive to produce.

According to a fourth aspect of the invention, there is provided a method of manufacturing a support structure for supporting a lamination stack and a winding structure in order to form a stator segment for an electric machine, in particular a wind turbine generator. The described method comprises (a) providing a frame comprising two parallel end plates and two side plates, the side plates extending between corresponding end portions of the end plates, (b) providing a plurality of internal connecting members extending within the frame between the end plates, and (c) providing a plurality of external connecting members extending outside of the frame, each external connecting member forming an extension of a corresponding internal connecting member beyond one of the end plates, wherein (d) the internal and external connecting members are adapted to engage with corresponding fastening members for securing a lamination stack.

This aspect of the invention is based on essentially the same idea as the first aspect described above.
The invention will be described in more detail hereinafter with reference to examples of embodiments. However, it is explicitly noted that the invention is not limited to the described exemplary embodiments.

### Brief Description of the Drawing

- Figure 1: shows a perspective view of a support structure according to an example useful for understanding the present invention.
- Figure 2: shows a further perspective view of the support structure shown in Figure 1.
- Figure 3: shows a top view of the support structure shown in Figures 1 and 2.
- Figure 4: shows a partial view of a support structure with a finger plate according to an embodiment of the present invention.
- Figure 5: shows a stator segment according to an embodiment of the present invention.

### Detailed Description

The illustration in the drawing is schematic. It is noted that in different figures, similar or identical elements are provided with the same reference numerals or with reference numerals which differ only within the first digit.

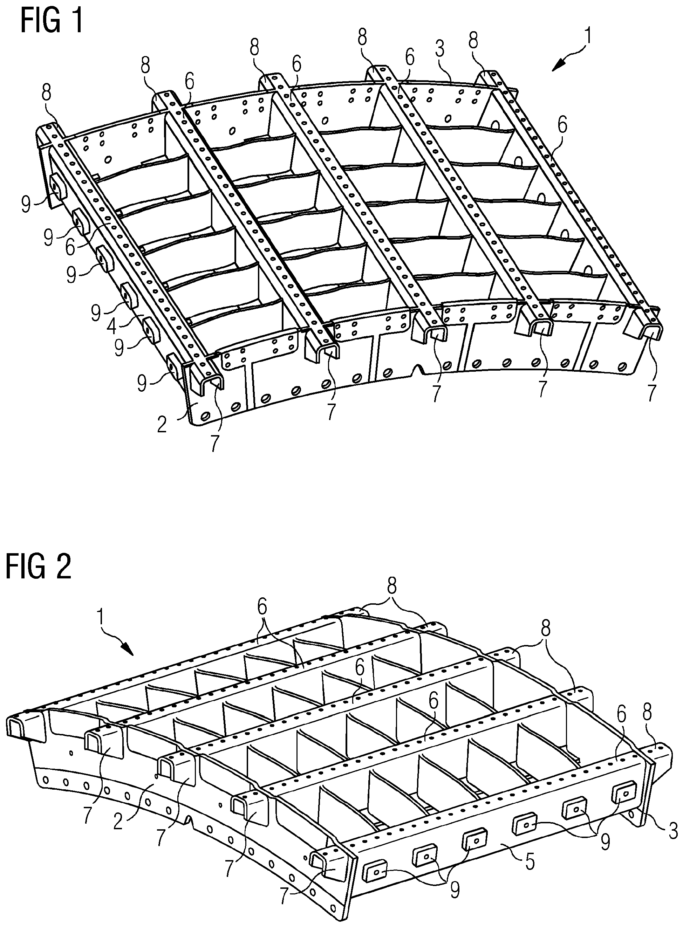

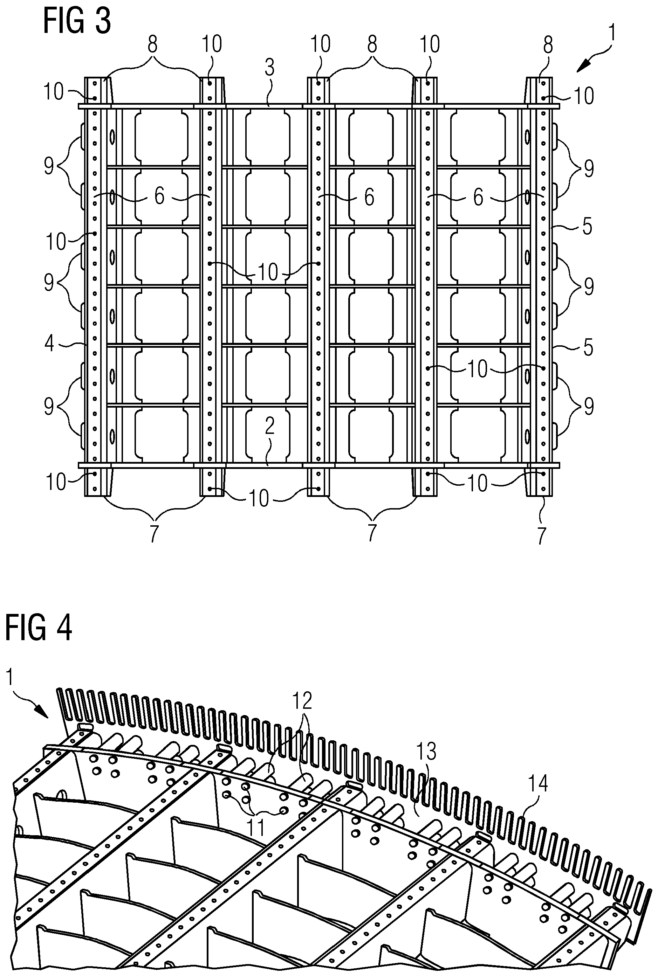

Figures 1-3 show different views of a support structure 1 according to an example useful for understanding the present invention. More specifically, Figure 1 shows one perspective view of the support structure 1, Figure 2 shows another perspective view of the support structure 1, and Figure 3 shows a top view of the support structure 1. The support structure 1 is particularly suitable for supporting a lamination stack and a winding structure in order to form a stator segment for an electric machine, in particular a wind turbine generator.

The support structure 1 comprises two parallel end plates 2, 3 and two side plates 4, 5 extending between corresponding end portions of the end plates 2, 3, thereby forming a substantially rectangular frame. The end plates 2, 3 have an arc-like shape such that the support structure 1 can be combined with several similar structures to form an annular stator structure around an axis of rotation, the axis of rotation being parallel to the side plates 4, 5. To allow such connections with neighboring structures, each side plate 4, 5 comprises a plurality of side connecting members 9 for bolting the segments together.

A plurality of internal connecting members 6 extend within the frame between the end plates 2, 3. In the specific embodiment shown, there are five internal connecting members 6 but the skilled person will appreciate that any other number of internal connecting elements 6 is possible, such as two, three, four, six, seven or more.

Furthermore, a plurality of external connecting members 7, 8 extends outside of the frame. Each external connecting member 7, 8 forms an extension of a corresponding internal connecting member 6 beyond one of the end plates. More specifically, external connecting members 7 extend away from end plate 2 while external connecting members 8 extend away from end plate 3. Thereby, a corresponding number (in the present exemplary embodiment five) of combined connecting members are formed, each constituted by one internal connecting member 6, one external connecting member 7 at the side of end plate 2, and one external connecting member 8 at the side of end plate 3. Hence, the total length of each combined connecting member exceeds the length of the frame by the length of the two external connecting members 7, 8. In this exemplary embodiment, the length of external connecting members 7 is substantially equal to the length of external connecting members 8. However, in other exemplary embodiments of the present invention the length of external connecting members 7 may differ from the length of external connecting members 8.

The internal 6 and external 7, 8 connecting members are configured to engage with corresponding fastening members (not shown) for securing a lamination stack on top of the support structure 1. As shown, particularly in Figure 3, this is achieved in the present embodiment by providing both the internal connecting members 6 and the external connecting members 7, 8 with an elongate flat surface facing toward the lamination material (not shown), in which surface a plurality of holes 10 is provided. The holes 10 allow bolts or other fastening elements to extend through the surface and into fastening members of a lamination stack, such as a rod forming a dovetail connection with the lamination stack.

The external connecting members 7, 8 have a u-shaped profile or cross-sectional shape, where the aforementioned surface with holes 10 constitutes the bottom of the u-shape. As shown in Figure 1 and Figure 2, the legs of the u-shape are longer in the vicinity of the end plates 2, 3 and gets shorter with increasing distance away from the end plates 2, 3. Thereby, the required strength and stability is provided with a minimum of material while leaving as much space as possible for other parts, such as windings, busbars, etc.

Figure 4 shows a partial view of support structure 1 with a finger plate 13 according to an embodiment of the present invention. The finger plate 13 forms a border for the (to be mounted) lamination stack and comprises a plurality of teeth or fingers 14 that allow a winding structure to extend in and out of the lamination stack. The finger plate 13 is displaced from the end plate by an amount corresponding to the length of the external connecting members. In the present exemplary embodiment this is achieved by arranging a plurality of cylindrical hollow spacers 12 and bolts 11 extending from the inner side of the end plate through the spacers 12 and into the finger plate 13 where it is fastened either by a thread in the finger plate 13 or by a nut on the outside of the finger plate 13.

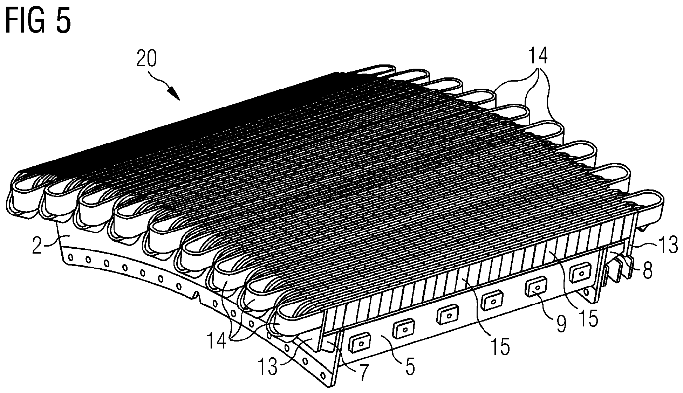

Figure 5 shows a stator segment 20 according to an embodiment of the present invention. The stator segment 20 comprises a support structure as the one discussed above and a lamination stack constituted by a plurality of lamination packets 15 arranged between finger plates 13 and fastened to the internal and external fastening members 6, 7, 8 of the support structure 1. A winding structure 14 is arranged within the lamination stack.

As can be seen, the length of the lamination stack 15 exceeds the length between the end plates 2 and 3 by an amount corresponding to the lengths of external fastening members 7, 8. Hence, it is possible to maximize the length of the lamination stack 15 in a flexible manner by adding the external connecting members 7, 8 with lengths that fit the remaining generator design and constraints but without changing the basic frame constituted by end plates 2, 3 and side plates 4, 5. In this way, the maximum torque of the generator can be optimized in a flexible manner. Looking at a lifetime of e.g. twenty years, this optimization can accumulate to a significant amount of power production.

It is noted that the term "comprising" does not exclude other elements or steps and the use of the articles "a" or "an" does not exclude a plurality. Also elements described in association with different embodiments may be combined. It is further noted that reference signs in the claims are not to be construed as limiting the scope of the claims.

## Claims

1. A support structure (1) for supporting a lamination stack and a winding structure in order to form a stator segment (20) for an electric machine, in particular a wind turbine generator, the support structure comprising
a frame comprising two parallel end plates (2, 3) and two side plates (4, 5), the side plates extending between corresponding end portions of the end plates,
a plurality of internal connecting members (6) extending within the frame between the end plates, and
a plurality of external connecting members (7, 8) extending outside of the frame, each external connecting member forming an extension of a corresponding internal connecting member beyond one of the end plates,
wherein the internal and external connecting members are adapted to engage with corresponding fastening members for securing a lamination stack,
wherein at least one of the end plates is adapted to be connected to a finger plate (13) via a finger plate connecting structure,
wherein the finger plate (13) forms a border for the lamination stack and comprises a plurality of teeth or fingers (14) that allow a winding structure to extend in and out of the lamination stack, and
wherein the finger plate (13) is displaced from the end plate by an amount corresponding to the length of the external connecting members (7,8).

2. The support structure according to the preceding claim, wherein the external connecting members have a u-shaped cross section.

3. The support structure according to the preceding claim, wherein the u-shaped cross section has a height that decreases with increasing distance away from the corresponding end plate.

4. The support structure according to any of the preceding claims, wherein the external connecting members extending from one of the end plates have a first length and the external connecting members extending from the other one of the end plates have a second length.

5. The support structure according to the preceding claim, wherein the first length and the second length are between 5% and 25% of the length of the lamination stack.

6. The support structure according to any of the preceding claims, wherein each of the internal connecting members and external connecting members comprises a plurality of holes (10) for allowing a bolt connection with the corresponding fastening members.

7. The support structure according to any of the preceding claims, wherein the end plates have an arc-like shape.

8. The support structure according to any of the preceding claims, wherein the end plate comprises a plurality of holes, and wherein the finger plate connecting structure comprises a plurality of cylindrical spacers (12) and a plurality of bolts (11).

9. The support structure according any of the preceding claims, wherein each of the two side plates comprises side connecting members (9) for mechanically connecting the support structure with a neighboring support structure.

10. A stator for an electric machine, in particular a wind turbine generator, the stator comprising a plurality of interconnected stator segments (20), wherein each stator segment comprises a support structure (1) according to any of the preceding claims, a lamination stack (15) and a winding structure (14).

11. A wind turbine comprising a stator according to the preceding claim.

12. A method of manufacturing a support structure (1) for supporting a lamination stack and a winding structure in order to form a stator segment for an electric machine, in particular a wind turbine generator, the method comprising
providing a frame comprising two parallel end plates (2,3) and two side plates (4,5), the side plates extending between corresponding end portions of the end plates,
providing a plurality of internal connecting members (6) extending within the frame between the end plates, and
providing a plurality of external connecting members (7,8) extending outside of the frame, each external connecting member forming an extension of a corresponding internal connecting member beyond one of the end plates,
wherein the internal and external connecting members are adapted to engage with corresponding fastening members for securing a lamination stack, wherein at least one of the end plates is adapted to be connected to a finger plate (13) via a finger plate connecting structure,
wherein the finger plate (13) forms a border for the lamination stack and comprises a plurality of teeth or fingers (14) that allow a winding structure to extend in and out of the lamination stack, and
wherein the finger plate (13) is displaced from the end plate by an amount corresponding to the length of the external connecting members (7,8).

## Patentansprüche

1. Stützstruktur (1) zum Stützen eines Blechpakets und einer Wickelstruktur, um ein Statorsegment (20) für eine elektrische Maschine, insbesondere einen Windturbinengenerator, zu bilden, wobei die Stützstruktur Folgendes umfasst
einen Rahmen, umfassend zwei parallele Endplatten (2, 3) und zwei Seitenplatten (4, 5), wobei sich die Seitenplatten zwischen entsprechenden Endabschnitten der Endplatten erstrecken,
eine Vielzahl von inneren Verbindungselementen (6), die sich innerhalb des Rahmens zwischen den Endplatten erstrecken, und
eine Vielzahl von äußeren Verbindungselementen (7, 8), die sich außerhalb des Rahmens erstrecken, wobei jedes äußere Verbindungselement eine Verlängerung eines entsprechenden inneren Verbindungselements über eine der Endplatten hinaus bildet,
wobei die inneren und die äußeren Verbindungselemente dazu ausgelegt sind, mit entsprechenden Befestigungselementen zum Sichern eines Blechpakets in Eingriff zu treten,
wobei mindestens eine der Endplatten dazu ausgelegt ist, über eine Fingerplattenverbindungsstruktur mit einer Fingerplatte (13) verbunden zu werden,
wobei die Fingerplatte (13) eine Grenze für das Blechpaket bildet und eine Vielzahl von Zähnen oder Fingern (14) umfasst, die es einer Wickelstruktur ermöglichen, sich in das und aus dem Blechpaket zu erstrecken, und
wobei die Fingerplatte (13) von der Endplatte um ein Maß verschoben ist, das der Länge der äußeren Verbindungselemente (7, 8) entspricht.

2. Stützstruktur nach dem vorhergehenden Anspruch, wobei die äußeren Verbindungselemente einen U-förmigen Querschnitt aufweisen.

3. Stützstruktur nach dem vorhergehenden Anspruch, wobei der U-förmige Querschnitt eine Höhe aufweist, die mit zunehmendem Abstand von der entsprechenden Endplatte weg abnimmt.

4. Stützstruktur nach einem der vorhergehenden Ansprüche, wobei die äußeren Verbindungselemente, die sich von einer der Endplatten erstrecken, eine erste Länge aufweisen und die äußeren Verbindungselemente, die sich von der anderen der Endplatten erstrecken, eine zweite Länge aufweisen.

5. Stützstruktur nach dem vorhergehenden Anspruch, wobei die erste Länge und die zweite Länge zwischen 5 % und 25 % der Länge des Blechpakets betragen.

6. Stützstruktur nach einem der vorhergehenden Ansprüche, wobei jedes der inneren Verbindungselemente und der äußeren Verbindungselemente eine Vielzahl von Löchern (10) zum Ermöglichen einer Schraubenverbindung mit den entsprechenden Befestigungselementen umfasst.

7. Stützstruktur nach einem der vorhergehenden Ansprüche, wobei die Endplatten eine bogenartige Form aufweisen.

8. Stützstruktur nach einem der vorhergehenden Ansprüche, wobei die Endplatte eine Vielzahl von Löchern umfasst und wobei die Fingerplattenverbindungsstruktur eine Vielzahl von zylindrischen Distanzstücken (12) und eine Vielzahl von Schrauben (11) umfasst.

9. Stützstruktur nach einem der vorhergehenden Ansprüche, wobei jede der zwei Seitenplatten seitliche Verbindungselemente (9) zum mechanischen Verbinden der Stützstruktur mit einer benachbarten Stützstruktur umfasst.

10. Stator für eine elektrische Maschine, insbesondere einen Windturbinengenerator, wobei der Stator eine Vielzahl von miteinander verbundenen Statorsegmenten (20) umfasst, wobei jedes Statorsegment eine Stützstruktur (1) nach einem der vorhergehenden Ansprüche, ein Blechpaket (15) und eine Wickelstruktur (14) umfasst.

11. Windturbine, umfassend einen Stator nach dem vorhergehenden Anspruch.

12. Verfahren zum Herstellen einer Stützstruktur (1) zum Stützen eines Blechpakets und einer Wickelstruktur, um ein Statorsegment für eine elektrische Maschine, insbesondere einen Windturbinengenerator, zu bilden, wobei das Verfahren Bereitstellen eines Rahmens, der zwei parallele Endplatten (2, 3) und zwei Seitenplatten (4, 5) umfasst, wobei sich die Seitenplatten zwischen entsprechenden Endabschnitten der Endplatten erstrecken, Bereitstellen einer Vielzahl von inneren Verbindungselementen (6), die sich innerhalb des Rahmens zwischen den Endplatten erstrecken, und Bereitstellen einer Vielzahl von äußeren Verbindungselementen (7, 8), die sich außerhalb des Rahmens erstrecken, umfasst, wobei jedes äußere Verbindungselement eine Verlängerung eines entsprechenden inneren Verbindungselements über eine der Endplatten hinaus bildet,
wobei das innere und das äußere Verbindungselement dazu ausgelegt sind, mit entsprechenden Befestigungselementen zum Sichern eines Blechpakets in Eingriff zu treten, wobei mindestens eine der Endplatten dazu ausgelegt ist, über eine Fingerplattenverbindungsstruktur mit einer Fingerplatte (13) verbunden zu werden,
wobei die Fingerplatte (13) eine Grenze für das Blechpaket bildet und eine Vielzahl von Zähnen oder Fingern (14) umfasst, die es einer Wickelstruktur ermöglichen, sich in das und aus dem Blechpaket zu erstrecken, und
wobei die Fingerplatte (13) von der Endplatte um ein Maß verschoben ist, das der Länge der äußeren Verbindungselemente (7, 8) entspricht.

## Revendications

1. Structure de support (1) destinée à supporter un empilement de tôles et une structure d'enroulement afin de former un segment de stator (20) pour une machine électrique, en particulier un générateur d'éolienne, la structure de support comprenant
un cadre comprenant deux plaques d'extrémité (2, 3) parallèles et deux plaques latérales (4, 5), les plaques latérales s'étendant entre des parties d'extrémité correspondantes des plaques d'extrémité,
une pluralité d'éléments de liaison internes (6) s'étendant à l'intérieur du cadre entre les plaques d'extrémité, et
une pluralité d'éléments de liaison externes (7, 8) s'étendant à l'extérieur du cadre, chaque élément de liaison externe formant un prolongement d'un élément de liaison interne correspondant au-delà de l'une des plaques d'extrémité,
dans laquelle les éléments de liaison internes et externes sont aptes à venir en prise avec des éléments de fixation correspondants pour fixer un empilement de tôles,
dans laquelle au moins une des plaques d'extrémité est apte à être reliée à une plaque à doigts (13) par l'intermédiaire d'une structure de liaison de plaque à doigts,
dans laquelle la plaque à doigts (13) forme une bordure pour l'empilement de tôles et comprend une pluralité de dents ou de doigts (14) permettant à une structure d'enroulement de s'étendre à l'intérieur et à l'extérieur de l'empilement de tôles, et
dans laquelle la plaque à doigts (13) est décalée de la plaque d'extrémité d'une quantité correspondant à la longueur des éléments de liaison externes (7, 8).

2. Structure de support selon la revendication précédente, dans laquelle les éléments de liaison externes présentent une section transversale en forme de U.

3. Structure de support selon la revendication précédente, dans laquelle la section transversale en forme de U présente une hauteur qui diminue à mesure que la distance par rapport à la plaque d'extrémité correspondante augmente.

4. Structure de support selon l'une quelconque des revendications précédentes, dans laquelle les éléments de liaison externes s'étendant à partir de l'une des plaques d'extrémité présentent une première longueur et les éléments de liaison externes s'étendant à partir de l'autre plaque d'extrémité présentent une seconde longueur.

5. Structure de support selon la revendication précédente, dans laquelle la première longueur et la seconde longueur sont comprises entre 5 % et 25 % de la longueur de l'empilement de tôles.

6. Structure de support selon l'une quelconque des revendications précédentes, dans laquelle chacun des éléments de liaison internes et des éléments de liaison externes comprend une pluralité de trous (10) pour permettre une liaison boulonnée avec les éléments de fixation correspondants.

7. Structure de support selon l'une quelconque des revendications précédentes, dans laquelle les plaques d'extrémité présentent une forme en arc.

8. Structure de support selon l'une quelconque des revendications précédentes, dans laquelle la plaque d'extrémité comprend une pluralité de trous, et dans laquelle la structure de liaison de plaque à doigts comprend une pluralité d'entretoises cylindriques (12) et une pluralité de boulons (11).

9. Structure de support selon l'une quelconque des revendications précédentes, dans laquelle chacune des deux plaques latérales comprend des éléments de liaison latéraux (9) pour relier mécaniquement la structure de support à une structure de support voisine.

10. Stator pour une machine électrique, en particulier un générateur d'éolienne, le stator comprenant une pluralité de segments de stator (20) reliés entre eux, dans lequel chaque segment de stator comprend une structure de support (1) selon l'une quelconque des revendications précédentes, un empilement de tôles (15) et une structure d'enroulement (14).

11. Éolienne comprenant un stator selon la revendication précédente.

12. Procédé de fabrication d'une structure de support (1) destinée à supporter un empilement de tôles et une structure d'enroulement afin de former un segment de stator pour une machine électrique, en particulier un générateur d'éolienne, le procédé comprenant la fourniture d'un cadre comprenant deux plaques d'extrémité (2, 3) parallèles et deux plaques latérales (4, 5), les plaques latérales s'étendant entre des parties d'extrémité correspondantes des plaques d'extrémité, la fourniture d'une pluralité d'éléments de liaison internes (6) s'étendant à l'intérieur du cadre entre les plaques d'extrémité, et la fourniture d'une pluralité d'éléments de liaison externes (7, 8) s'étendant à l'extérieur du cadre, chaque élément de liaison externe formant un prolongement d'un élément de liaison interne correspondant au-delà de l'une des plaques d'extrémité,
dans lequel les éléments de liaison internes et externes sont aptes à venir en prise avec des éléments de fixation correspondants pour fixer un empilement de tôles ; dans lequel au moins une des plaques d'extrémité est apte à être reliée à une plaque à doigts (13) par l'intermédiaire d'une structure de liaison de plaque à doigts,
dans laquelle la plaque à doigts (13) forme une bordure pour l'empilement de tôles et comprend une pluralité de dents ou de doigts (14) permettant à une structure d'enroulement de s'étendre à l'intérieur et à l'extérieur de l'empilement de tôles, et
dans laquelle la plaque à doigts (13) est décalée de la plaque d'extrémité d'une quantité correspondant à la longueur des éléments de liaison externes (7, 8).
